(19) Europäisches Patentamt
European Patent Office
Office européen des brevets

(11) Publication number: 0 141 794
A1

# (12) EUROPEAN PATENT APPLICATION

(21) Application number: 84870109.0

(22) Date of filing: 02.08.84

(51) Int. Cl.[4]: C 07 F 9/40, A 01 N 57/22

(30) Priority: 04.08.83 US 520362

(43) Date of publication of application: 15.05.85 Bulletin 85/20

(84) Designated Contracting States: BE CH DE FR IT LI NL SE

(71) Applicant: Monsanto Company, Patent Department 800 North Lindbergh Boulevard, St. Louis Missouri 63167 (US)

(72) Inventor: Dutra, Gerard Anthony, 6 Oak Bend Drive, Ladue Missouri 63124 (US)
Inventor: Sikorski, James Alan, 408 Miriam Avenue, Kirkwood Missouri 63122 (US)

(74) Representative: Lunt, John Cooper et al, Monsanto Europe S.A. Patent Department Avenue de Tervuren 270-272 Letter Box No 1, B-1150 Brussels (BE)

(54) **Aralower alkyl and substituted aralower alkyl esters of N-phosphonomethylglycines.**

(57) Compounds of the formula

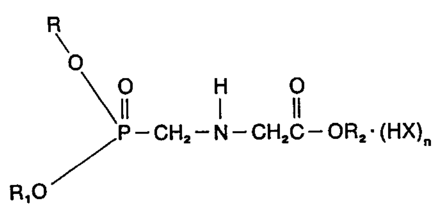

wherein R and $R_1$ are independently selected from phenyl, benzyl, naphtyl, biphenylyl; or phenyl, benzyl, biphenylyl or naphthyl groups substituted with from 1 to 3 groups selected from nitro, lower alkyl, lower alkoxy, lower alkylthio, trifluoromethyl or halo, $R_2$ is an aralower alkyl or substituted aralower alkyl group, n is an integer of 0 or 1 and HX is a strong acid, are useful as post-emergent herbicides.

EP 0 141 794 A1

# ARALOWER ALKYL AND SUBSTITUTED ARALOWER ALKYL ESTERS OF N-PHOSPHONOMETHYLGLYCINES

This invention relates to derivatives of N-phosphonomethylglycine having an aralower alkyl or substituted aralower alkyl group bonded to the carboxyl group, to herbicidal compositions containing the same and to herbicidal methods employing such derivatives.

## BACKGROUND OF THE INVENTION

U.S. Patent No. 4,120,689 issued to Gerard A. Dutra on October 17, 1978, discloses alkyl-[di(benzyl) or di(aryl)] esters of N-phosphonomethyl glycine prepared by the reaction of a dibenzyl or diaryl phosphite with an N-methylene lower alkyl glycinate trimer. These esters and the hydrolysis products thereof containing at least one benzyloxy or aryloxy group bonded to the phosphorus atom thereof are disclosed as compounds having the formula

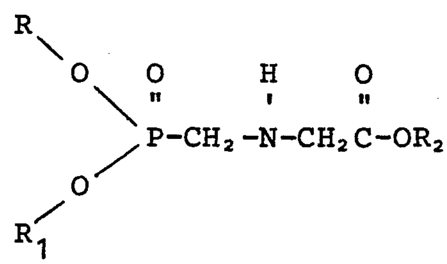

wherein R of U.S. Patent No. 4,120,689, supra is disclosed as a member of the group consisting of phenyl, benzyl, naphthyl, biphenylyl, benzyloxyphenyl and phenyl, benzyl or naphthyl groups substituted with from 1 to 3 groups selected from the class consisting of hydroxyl, lower alkyl, lower alkoxy, lower alkylthio, trifluoromethyl, carbo (lower alkoxy), nitro, or halo; $R_1$ of U.S. 4,120,689, supra is hydrogen or an R group and $R_2$ of U.S. 4,120,689, supra is a lower

alkyl group or hydrogen and the strong acid salts of the compounds wherein neither $R_1$ or $R_2$ is H. A post-emergent herbicide utility is disclosed.

Trialkyl esters of N-phosphonomethylglycine are known as are methods for producing such esters. For example, tetraalkyl esters of N-phosphonomethyl imino diacetic acid can be electrolytically converted to trialkyl esters of N-phosphonomethylglycine as is disclosed in U.S. Patent 3,859,183 issued to John H. Wagenknecht on January 7, 1975. U.S. Patent 4,120,689 supra teaches that most of the trialkyl esters of N-phosphonomethylglycine are generally ineffective as post-emergent herbicides.

## BRIEF DESCRIPTION OF THE INVENTION

The compounds of this invention are those having the formula

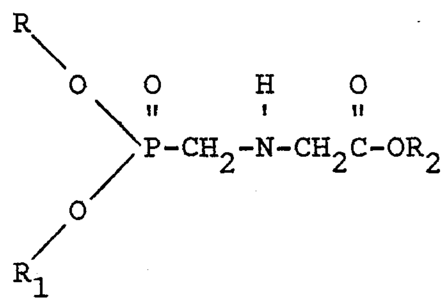

(I)

wherein R and $R_1$ are selected from the group consisting of phenyl, benzyl, naphthyl, biphenylyl; and phenyl, benzyl or naphthyl groups substituted with from 1 to 3 groups selected from the class consisting of hydroxyl, lower alkyl, lower alkoxy, lower alkylthio, trifluoromethyl, and halogen. $R_2$ is an aralower alkyl or substituted aralower alkyl group, as well as the strong acid salts of those aforerecited compounds.

The compounds of formula I can be treated with a strong acid to form strong acid salts of the formula

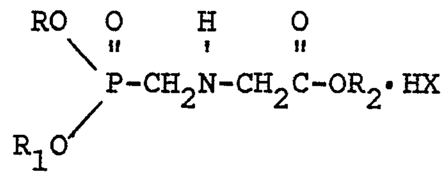

(II)

wherein R, $R_1$, and $R_2$ are as defined above and HX is a strong acid.

The triesters of formula I can also be hydrolyzed by mild hydrolysis at a temperature in the range from about 15 to about 80°C or above to yield monohydroxy diester compounds of the formula

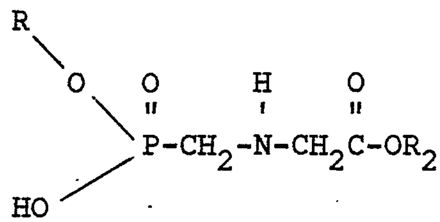

(III)

wherein R and $R_2$ are as above defined.

The monohydroxy diester compounds of formula III can be further hydrolyzed by heating at a temperature in the range from about 50°C to about 80°C or above with water and a solvent such as acetone to yield monoester dihydroxy N-phosphonomethylglycine compounds of the formula

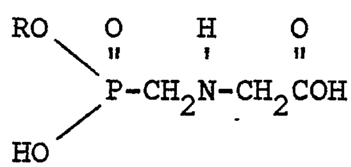

(IV)

wherein R is as above defined.

Triesters of this invention are prepared by reacting a diaryl phosphite with an aralower alkyl N-methylene glycinate trimer or a substituted

aralower alkyl N-methylene glycinate trimer. The following equation shows, for example, the reaction of diphenyl phosphite with the N-methylenebenzylglycinate trimer to form a diphenyl benzyl triester of N-phosphonomethylglycine:

$$3(C_6H_5O)_2\overset{O}{\overset{\|}{P}}-H + (CH_2=N-CH_2-\overset{O}{\overset{\|}{C}}-OCH_2C_6H_5)_3 \longrightarrow (C_6H_5O)_2\overset{O}{\overset{\|}{P}}-CH_2\overset{H}{\overset{|}{N}}-CH_2-\overset{O}{\overset{\|}{C}}-OCH_2C_6H_5$$

The term "halo or halogen" as employed herein means chlorine, bromine, iodine, and fluorine.

The term "lower alkyl" as employed herein means a $C_1$ to $C_4$ alkyl group such as methyl, ethyl, propyl, isopropyl, primary, secondary, and tertiary butyl.

The term "aralower alkyl" as employed herein includes groups representative of the aforedefined term "lower alkyl" in combination with groups representative of the term "aryl".

Illustrative aralower alkyl groups include phenylmethyl, phenylethyl, phenylpropyl, phenylbutyl, mixtures thereof, and the like.

The term "aryl" includes groups such as phenyl, naphthyl, or biphenylyl.

The term "substituted aralower alkyl" includes groups representative of the aforementioned term aralower alkyl which have one to three substituents on the aryl portion selected from the group consisting of lower alkyl, lower alkoxy, lower alkylthio, methylene dioxy, trifluoromethyl, nitro, and halogen, such as 2-(2-methylphenyl) ethyl and the like.

The term "lower alkoxy" includes groups representative of the term "lower alkyl" in combination with oxygen and includes methoxy, ethoxy, propoxy, butoxy mixtures thereof and the like.

The term "lower alkylthio" includes representatives of lower alkyl in combination with sulfur.

The strong acids which are useful in preparing the strong acid salts of formula II are those having a $pK_a$ in water of 2.5 or less and include, for example, p-toluenesulfonic acid, p-chlorobenzenesulfonic acid, trichloroacetic acid, oxalic acid, fluoboric acid, hydrogen chloride, hydrogen bromide, hydriodic acid, trifluoroacetic acid, pentafluoropropionic acid, heptafluorobutyric acid, trifluoromethanesulfonic acid, nitric acid, sulfuric acid, phosphoric acid, trichloromethane-phosphonic acid, perchloric acid, methanesulfonic acid and the like.

Illustrative of substituted phenyl, benzyl, and naphthyl groups which R and $R_1$ may represent are for example, mono and di-halophenyl such as chlorophenyl, dichlorophenyl, chlorobromophenyl, bromophenyl, diiodophenyl, fluorophenyl, chloronaphthyl, chlorobenzyl, dichlorobenzyl, 2,3 or 4-methylbenzyl, 2,3 or 4-chlorobenzyl, 2,3 or 4-nitrobenzyl, lower alkoxy substituted such as methoxy, ethoxy, propoxy or butoxy-phenyl, benzyl or naphthyl, 2,3 and 4-nitrophenyl, trifluoromethylphenyl, trifluoromethylbenzyl, 2-chloro-4-methyl phenyl, 2-methyl-4-chlorophenyl and the like.

Certain members of the substituent groups of R and $R_1$ may exhibit steric hindrance in processes of manufacture, as, for example, t-butyl groups. In such event tri-substitution will usually occur on nonadjacent positions of the aryl nucleus. Otherwise, the substituent groups are not limited by any particular location on the aryl nucleus.

DETAILED DESCRIPTION OF THE INVENTION

In accordance with this invention, triesters of N-phosphonomethylglycine are prepared by the following general procedure:

A solution comprising a phosphite diester of the formula

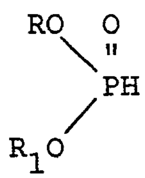

(V)

and an N-methylene aralower alkyl or substituted aralower alkyl glycinate trimer of the formula

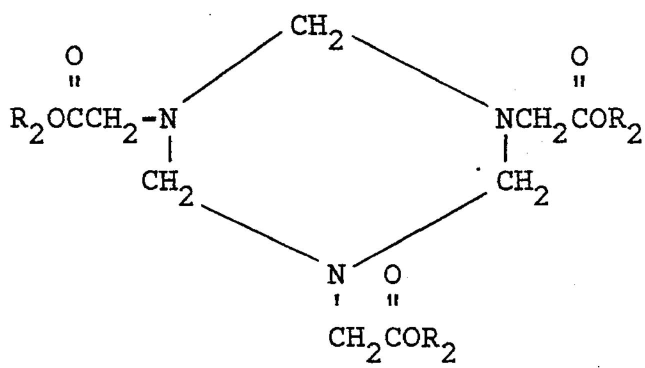

(VI)

also illustrated as $(CH_2{=}N{-}CH_2COOR_2)_3$ wherein R, $R_1$, and $R_2$ are as above defined, is formed in an aprotic solvent which is inert with all of the reactants and products. The solution is heated to a temperature sufficiently elevated to initiate and sustain a reaction between the phosphite diester and the trimer. The solution is maintained at a temperature sufficient to produce a triester of N-phosphonomethylglycine having the structure of formula I. The triesters of formula I can be recovered by removal of the solvent from the solution or they can be suitably employed as a solvent solution.

In conducting the process of this invention, molar ratios of the phosphite diester to the aralower alkyl or substituted aralower alkyl N-methylene glycinate trimer of from about 0.1 to 1 to about 10 to 1 can be employed. It is of course apparent from the above equation that for best yields and ease of recovery of product, it is preferred to employ ratios of the phosphite diester to trimer of 3 to 1.

Although a solvent is not necessary, a solvent may be employed if desired. Solvents which can be employed in producing the triesters of this invention are typically anhydrous aprotic solvents which are inert to the trimer and the phosphite. It is necessary that the solvents be anhydrous so as to prevent premature hydrolysis of the phosphite. Examples of acceptable aprotic solvents are acetonitrile, benzene, toluene, xylene, mono and dichlorobenzene, methylene chloride, chloroform, carbon tetrachloride, ethyl acetate, dimethylformamide, tetrahydrofuran, diethyl ether, ethylene glycol dimethyl ether, diethylene glycol dimethylether and the like. Dimethyl sulfoxide, although an aprotic solvent is not a suitable solvent since it reacts with the phosphite esters.

The temperature at which the process of this invention is conducted is not critical. The temperature should be that which is sufficiently elevated so as to initiate and maintain the aforedescribed reaction. A temperature in the range of from about 20 to about 200°C can be employed. The reaction temperature is generally controlled by controlling the boiling point of the particular solvent employed (e.g., the reflux temperature of the solvent employed). Generally it is preferred to employ a temperature in the range of from about 25°C to about 170°C.

The process of this invention can be conducted at atmospheric pressure, subatmospheric pressure, or superatmospheric pressure. For convenience and economy, it is preferred to conduct the process of this invention at atmospheric pressure.

Strong acid salts of compounds of formula I are produced by dissolving the compound of formula I in a suitable solvent such as methylene chloride or chloroform and a strong acid added. The salt precipitates or diethyl ether is added and the salt forms a solid or insoluble oil.

Mono hydroxy diester compounds of formula (III) are produced by mild hydrolysis according to one of the following preferred general methods.

A. A stirred solution of the phosphite ester and the N-methylene aralower alkyl glycinate trimer is refluxed in a suitable solvent for from 1 to 2 hours and cooled to room temperature and allowed to stand for a period of time, generally 18 to 60 hours, open to the atmosphere to give a suspension of a solid hydroxy ester of formula (III). The solid is washed with acetone and dried.

B. A triester of formula (I) is dissolved in a suitable solvent such as acetone containing about 5% water, by volume, and heated to reflux temperature for approximately 24 hours. After cooling to a temperature of about 25°C, the solid monohydroxy ester of formula III which formed is removed by filtration and washed once or twice with a solvent such as acetone.

The monohydroxy ester of formula III is converted to a mono ester of formula (IV) by refluxing it for a period of time sufficient to hydrolyze the carboxylic ester group in an acetone-water mixture. The mono ester of formula (IV) is recovered as a solid by filtration.

The compounds of this invention are useful as post-emergent herbicides.

The following examples serve to further illustrate the invention. All parts and percentages are by weight unless otherwise indicated.

Example 1

N-methylene phenylmethylglycinate trimer (37.5g, 0.07 mol) and bis(p-methylthiophenyl)phosphite [86g (80% assay), 0.21 mol] were combined in 250 ml of acetonitrile. The resulting solution was refluxed for 3 hours and cooled to room temperature. Methane sulfonic acid (20.2g, 0.21 mol) was added. The solution was concentrated on a rotovap to give an oil. This oil was slurried in ether and then cold 10% aqueous sodium hydroxide was added. The ether layer was separated, washed with water, dried over $MgSO_4$, filtered and concentrated to give a yellow oil. This yellow oil was stirred for several days in 220 ml acetone. A white precipitate developed slowly which

was collected by filtration, washed with acetone and air dried to give a white solid 1.4g, melting point 185-187°C., glycine, N-[[hydroxy[4-(methylthio)-phenoxy]phosphinyl]methyl],-phenylmethyl ester corresponding to a compound of formula (III) when R is p-methylthiophenyl and $R_2$ is phenylmethyl. On prolonged standing the filtrate slowly deposited more product 4.5g, melting point 191-192°C. Total yield was 5.9g (32%). The white solid had the following analysis:

| | |
|---|---|
| Calculated for $C_{17}H_{20}N_1O_5P_1S_1$: | C, 53.54; H, 5.28; N, 3.67; S, 8.41 |
| Found: | C, 53.56; H, 5.30; N, 3.65; S, 8.42. |

Example 2

N-methylene phenylmethylglycinate trimer (5g, 0.0094 mol) and bis(4-chloro-3-methylphenyl)-phosphite [10.8g (85% assay), 0.028 mol] were combined in 250 ml of acetonitrile. The resulting solution was refluxed under nitrogen for 1.5 hours and cooled to room temperature. Methane sulfonic acid (2.7g, 0.028 mol) was added. Ether was added to the cloud point. On cooling in a refrigerator, a white precipitate formed which was collected by filtration to give a white solid, 7.2g (43%), melting point 106-108°C, glycine, N-[[bis(4-chloro-3-methylphenoxy)phosphinyl]methyl]-phenylmethyl ester, methane sulfonic acid salt corresponding to a compound of formula (II) when R and $R_1$ are 4-chloro-3-methylphenyl, and $R_2$ is phenylmethyl and HX is methane sulfonic acid and having the following analysis:

| | |
|---|---|
| Calculated for $C_{25}H_{28}N_1O_8P_1S_1Cl_2$: | C, 49.67; H, 4.67 N, 2.32; S, 5.30 |
| Found: | C, 49.94; H, 4.61 N, 2.25; S, 5.65. |

Example 3

Glycine, N-[[bis(4-chloro-3-methylphenoxy)-phosphinyl]methyl]-phenylmethyl ester, methane sulfonic acid salt (4.0g, 0.0066 mol) was slurried in 25 ml cold ether. Cold 10% aqueous NaOH (20 ml) was added and the mixture stirred vigorously until all of the solid had dissolved. The ether layer was washed with cold water, separated, dried over $MgSO_4$, filtered and concentrated on a rotovap to give a colorless oil 3.2 g (95%), glycine, N-[[bis(4-chloro-3-methylphenoxy)phosphinyl]methyl]-,phenylmethyl ester, corresponding to a compound of formula (I) wherein R and $R_1$ are both 4-chloro-3-methylphenyl, and $R_2$ is phenylmethyl, $N^{25}$=1.5690 and having the following analysis:

| | |
|---|---|
| Calculated for $C_{24}H_{24}N_1O_5P_1Cl_2$: | C, 56.71; H, 4.76<br>N, 2.76 |
| Found: | C, 56.34; H, 4.78;<br>N, 2.60. |

Example 4

Bis(p-methoxyphenyl)phosphite (32.0g, 77% assay by $^{31}P$ NMR, 0.084 mol), was combined with N-methylene phenylmethyl glycinate trimer (15g, 0.028 mol) in 250 ml acetonitrile in an oven-dried 500 ml flask. The resulting solution was refluxed under nitrogen for 1-1/2 hours and then was allowed to cool to room temperature. $^{31}P$ NMR analysis of the reaction mixture indicated the reaction had proceeded to completion. Methane sulfonic acid (8.14g, 0.084 mol) was added. When no crystallization occurred, diethyl ether was added to the cloud point. After storage overnight in a refrigerator, the composition had formed an oil. Crystallization from ethyl acetate and diethyl ether proved unsuccessful so the composition was concentrated on a rotovap to give a yellow

oil. A 10g portion of this oil was slurried in 20 ml diethyl ether and then 20 ml of cold 10% sodium hydroxide was added. The resulting mixture was stirred vigorously. This diethyl ether layer was separated, washed with 20 ml cold water, dried over magnesium sulfate, and concentrated to give a yellow oil, 3.6g. This oil was adsorbed onto 10g of silica gel and purified by medium pressure liquid chromatography eluting with 60% ethyl acetate 40% cyclohexane at 10 ml per minute. Twenty ml fractions were recovered and fractions #8-25 were combined and concentrated to give 2.3g of a yellow oil, $n^{25}$ 1.5649 glycine, N-[[bis(4-methoxyphenoxy)phosphinyl]methyl]-, phenylmethyl ester corresponding to a compound of formula (I) wherein R and $R_1$ are both p-methoxyphenyl and $R_2$ is phenylmethyl and having the following analysis:

Calculated for $C_{24}H_{26}NO_7P$: C, 61.14; H, 5.56; N, 2.97
Found: C, 60.68; H, 5.59; N, 2.65.

Similar purification of the remaining crude product produced an additional 6.1g of pure product. Total yield 8.4g, 21%.

Example 5

N-methylene phenylmethyl glycinate trimer (0.018 mol, 9.3g) was combined with bis-(2-methoxyphenyl)phosphite (0.053 mol, 17.16g of 90% assay) in 300 ml of benzene as an anhydrous solvent. The resulting solution was refluxed for three hours, then stirred overnight at room temperature and concentrated on a rotovap to give a yellow oil. The oil was dissolved in 100 ml of methylene chloride, then methane sulfonic acid (0.053 mol, 5.04g) was added dropwise. After stirring the solution for one hour at room temperature, the solution was brought to the cloud point with diethyl ether and then stored in the

freezer. After four days a white solid appeared which was collected by filtration and stored under vacuum to yield a white solid, 14.6g (48%), melting point 87-90°C, glycine, N-[[bis-(2-methoxyphenoxy)-phosphinyl]methyl],phenylmethyl ester, methane sulfonic acid salt 3/4 hydrate corresponding to a compound of formula (II) wherein R and $R_1$ are both o-methoxyphenyl, $R_2$ is phenylmethyl and HX is methane sulfonic acid and having the following analysis:

Calculated for $C_{25}H_{30}NO_{10}PS \cdot 3/4\ H_2O$:
C, 51.68; H, 5.46;
N, 2.41; S, 5.52

Found:
C, 51.68; H, 5.45
N, 2.50; S, 5.70.

Example 6

N-methylene phenylmethyl glycinate trimer (.035 mol, 18.7g) and diphenylphosphite (.105 mol, 27.5g of 90% assay) were combined in 250 ml of acetonitrile. The resulting solution was refluxed for three hours, cooled to room temperature, then methane sulfonic acid (.105 mol, 9.6g) was added. After 30 minutes at room temperature, enough ether was added to bring the solution to the cloud point. Upon cooling, a white precipitate resulted, which was collected by filtration and air dried to give a white solid 20.5g (38%), melting point 144-146°C, glycine N-[(bisphenoxyphosphinyl)methyl]-, (phenylmethyl) ester, methanesulfonic acid salt,

hemihydrate corresponding to a compound of formula (II) wherein R and $R_1$ are both phenyl, $R_2$ is phenylmethyl and HX is methane sulfonic acid and having the following analysis:

Calculated for $C_{23}H_{26}NO_8PS$ 1/2 $H_2O$:
C, 53.48; H, 5.27;
N, 2.71; S, 6.21;
Found:
C, 53.15; H, 5.35;
N, 2.87; S, 6.42.

Example 7

Glycine, N-[(bisphenoxy)-phosphinyl]methyl]-, phenylmethyl ester, methanesulfonic acid, salt, hemihydrate from Example 6 (10.0g, 0.02 mol) was dissolved in 100 ml of acetonitrile containing triethylamine (0.03 mol, 3.4g). After fifteen minutes the solution was filtered and concentrated to an oil. This oil was extracted twice with 100 ml of diethyl ether. A diethyl ether insoluble material remained. The ether extracts were combined, dried over $MgSO_4$, filtered and concentrated to give a yellow oil product glycine, N-[(bisphenoxyphosphinyl)-methyl]-,phenylmethyl ester hemihydrate 2.8g (34%) corresponding to a compound of formula (I) wherein R and $R_1$ are both phenyl and $R_2$ is phenylmethyl and having the following analysis:

Calculated for $C_{22}H_{22}NO_5P \cdot 1/2\ H_2O$:
C, 62.85; H, 5.51;
N, 3.33
Found:
C, 63.15; H, 5.70;
N, 3.06.

Example 8

Example 8 illustrates a hydrolysis of the product compound of Example 7. Diethyl ether insoluble material of previous Example 7 was stirred in 200 ml of acetone for several days at room temperature. A white precipitate slowly formed, which was collected by filtration and air dried to give as a product a white solid 1.9g (44%), melting point 194.5-195.5°C glycine, N-[(hydroxyphenoxy-phosphinyl)methyl]-, phenylmethyl ester corresponding to a compound of formula (III) wherein R is phenyl, $R_1$ is hydroxy, and $R_2$ is phenylmethyl and having the following analysis:

Calculated for $C_{16}H_{18}NO_5P$: C, 57.31; H, 5.41; N, 4.18

Found: C, 57.33; H, 5.42; N, 4.17.

Other compounds of the present invention that can be made in accordance with the general foregoing procedure include:

1. Glycine - N-[bisphenoxyphosphinyl-methyl]-,(3-trifluoromethylphenyl)methyl ester.

2. Glycine - N-[bis(2-methoxyphenoxy)-phosphinylmethyl]-,(5-chloro-2-nitrophenyl)methyl ester.

3. Glycine - N-[bisphenoxyphosphinyl-methyl]-,4-(4-methoxyphenyl)butyl ester.

4. Glycine - N-[bis-(2-methoxyphenoxy)-phosphinylmethyl]-,2-(2-methylphenyl)ethyl ester.

5. Glycine - N-[bisphenoxyphosphinyl-methyl]-,(2,4,6-trimethylphenyl)methyl ester.

wherein y is an integer of 1 to 4, X is selected from the group consisting of lower alkyl, lower alkoxy, halo, nitro, and $CF_3$ and m is an integer of 1 to 3.

Example 9

The post-emergent herbicidal activity of some of the various compounds of this invention was demonstrated by greenhouse testing in the following manner. A good grade of top soil is placed in aluminum pans having holes in the bottom and compacted to a depth of 0.95 to 1.27 cm. from the top of the pan. A predetermined number of seeds of each of several dicotyledonous and monocotyledonous annual plant species and/or vegatative propagules for the perennial plant species were placed on the soil and pressed into the soil surface. The seeds and/or vegetative propagules are covered with soil and leveled. The pans are then placed on a sand bench in the greenhouse and watered from below as needed. After the plants reach the desired age (two to three weeks), each pan except for the control pans is removed individually to a spraying chamber and sprayed by means of an atomizer operating at a positive air pressure of approximately 1.46 $kg/cm^2$ absolute. The atomizer contains 6 ml. of a solution or suspension of the chemical. In that 6 ml., is an amount of a cyclohexanone emulsifying agent mixture to give a spray solution or suspension which contains about 0.4% by weight of the emulsifier. The spray solution or suspension contains a sufficient amount of the candidate chemical in order to give application rates corresponding to those set forth in the tables. The spray solution is prepared by taking an aliquot of a 1.0% by weight stock solution or suspension of the candidate chemical in an organic solvent such as acetone or tetrahydrofuran or in

water. The emulsifying agent employed is a mixture comprising 35 weight percent butylamine dodecylbenzene sulfonate and 65 weight percent of a tall oil ethylene oxide condensate having about 11 moles of ethylene oxide per mole of tall oil. The pans are returned to the greenhouse and watered as before and the injury to the plants as compared to the control is observed at approximately two and four weeks and the results recorded. In the tables, WAT means "weeks after treatment". In some instances, the two-week observations are omitted.

The post-emergent herbicidal activity index used in Tables I and II is as follows:

| Plant Response | Index |
|---|---|
| 0 - 24% control | 0 |
| 25 - 49% control | 1 |
| 50 - 74% control | 2 |
| 75 - 99% control | 3 |
| 100% control | 4 |

The plant species utilized in these tests are identified by letter in accordance with the following legend:

| | |
|---|---|
| A - Canada Thistle* | K - Barnyardgrass |
| B - Cocklebur | L - Soybean |
| C - Velvetleaf | M - Sugar Beet |
| D - Morningglory | N - Wheat |
| E - Lambsquarters | O - Rice |
| F - Smartweed | P - Sorghum |
| G - Yellow Nutsedge* | Q - Wile Buckwheat |
| H - Quackgrass* | R - Hemp Sesbania |
| I - Johnsongrass* | S - Panicum Spp |
| J - Downy Brome | R - Crabgrass |

* -- Established from vegetative propagules.

Table I

| Compound of Example No. | WAT | kg/h | A | B | C | D | E | F | G | H | I | J | K |
|---|---|---|---|---|---|---|---|---|---|---|---|---|---|
| | | | Plant Species | | | | | | | | | | |
| 1 | 4 | 11.2 | - | 1 | 1 | 1 | 2 | 1 | 1 | 1 | 3 | 1 | 2 |
| | 4 | 5.6 | - | 1 | 0 | 1 | 1 | 0 | 1 | 0 | 2 | 0 | 2 |
| 2 | 4 | 11.2 | 4 | 2 | 0 | 1 | 0 | 4 | 1 | 1 | 2 | 1 | 2 |
| | 4 | 5.6 | 1 | 1 | 0 | 0 | 3 | 0 | 1 | 2 | 0 | 0 | 2 |
| 3 | 4 | 11.2 | 2 | 2 | 0 | 2 | 3 | 3 | 2 | 0 | 0 | 0 | 3 |
| | 4 | 5.6 | - | 1 | 0 | 1 | 4 | 4 | 2 | 3 | 1 | 0 | 2 |
| 4 | 4 | 11.2 | - | 2 | 0 | 2 | 2 | 1 | 1 | 1 | 2 | 2 | 2 |
| | 4 | 5.6 | - | 2 | 0 | 2 | 2 | 1 | 2 | 4 | 0 | 1 | 3 |
| 5 | 4 | 11.2 | 2 | 4 | 4 | 3 | 4 | 4 | 3 | 3 | 4 | 4 | 4 |
| | 4 | 5.6 | 3 | 3 | 4 | 3 | 3 | 4 | 3 | 4 | 1 | 3 | 4 |
| 6 | 4 | 11.2 | 3 | 4 | 4 | 3 | 4 | 4 | 3 | 3 | 4 | 4 | 4 |
| | 4 | 5.6 | 1 | 3 | 2 | 3 | 4 | 4 | 2 | 2 | 3 | 3 | 4 |
| 7 | 4 | 11.2 | 4 | 3 | 4 | 3 | 3 | 4 | 2 | 4 | 3 | 2 | 4 |
| | 4 | 5.6 | 4 | 2 | 3 | 2 | 3 | 4 | 2 | 3 | 4 | 2 | 3 |
| 8 | 4 | 11.2 | - | 2 | 3 | 2 | 2 | 4 | 2 | 3 | 4 | 3 | 4 |

- Indicates species of plant absent during this test.

## Table II

| Compound of Example No. | WAT | kg/h | L | M | N | O | P | B | Q | D | R | E | F | C | J | S | K | T |
|---|---|---|---|---|---|---|---|---|---|---|---|---|---|---|---|---|---|---|
| | | | Plant Species | | | | | | | | | | | | | | | |
| 2 | 4 | 5.6 | 0 | 3 | 2 | 1 | 2 | 1 | 2 | 2 | 1 | 3 | 2 | 1 | 2 | 3 | 3 | 3 |
| | 4 | 1.12 | 0 | 1 | 1 | 0 | 1 | 0 | 1 | 1 | 0 | 1 | 1 | 0 | 0 | 3 | 2 | 3 |
| | 2 | 0.28 | 0 | 0 | 0 | 0 | 0 | 0 | 0 | 0 | 0 | 0 | 0 | 0 | 0 | 0 | 0 | 2 |
| 3 | 4 | 5.6 | 0 | 2 | 1 | 0 | 1 | 1 | 1 | 1 | 1 | 3 | - | 0 | 1 | 1 | 2 | 1 |
| | 4 | 5.6 | 0 | 2 | 0 | 0 | 1 | 2 | 2 | 0 | 1 | 3 | - | 1 | 1 | 2 | 2 | 3 |
| | 4 | 1.12 | 0 | 0 | 0 | 0 | 0 | 0 | 0 | 0 | 0 | 0 | - | 0 | 0 | 1 | 1 | 2 |
| | 4 | 1.12 | 0 | 0 | 0 | 0 | 0 | 0 | 0 | 0 | 0 | 1 | - | 0 | 0 | 2 | 1 | 3 |
| | 4 | 0.28 | 0 | 0 | 0 | 0 | 0 | 0 | 0 | 0 | 0 | 0 | - | 0 | 0 | 0 | 1 | 2 |
| 4 | 2 | 5.6 | 0 | 1 | 1 | 1 | 1 | 1 | 1 | 1 | 0 | 1 | 1 | 1 | 0 | 0 | 1 | 1 |
| | 2 | 1.12 | 0 | 0 | 0 | 0 | 0 | 0 | 0 | 0 | 0 | 0 | 0 | 0 | 0 | 1 | 1 | 1 |
| 5 | 4 | 5.6 | 3 | 3 | 4 | 3 | 4 | 4 | 3 | 4 | 4 | 4 | - | 4 | 4 | 4 | 3 | 4 |
| | 4 | 1.12 | 1 | 1 | 2 | 1 | 2 | 2 | 2 | 1 | - | 3 | - | 2 | 1 | 2 | 2 | 3 |
| | 4 | 0.28 | 1 | 0 | 1 | 0 | 1 | 0 | 1 | 1 | - | 1 | - | 0 | 0 | 1 | 2 | 3 |
| 6 | 4 | 5.6 | 3 | 4 | 4 | 4 | 4 | 3 | 4 | 3 | 4 | - | 4 | 3 | 3 | 4 | 4 | 4 |
| | 4 | 1.12 | 1 | 2 | 2 | 1 | 2 | 2 | 2 | 2 | - | 3 | 3 | 2 | 2 | 4 | 3 | 3 |
| | 4 | 0.28 | 0 | 2 | 1 | 1 | 1 | 1 | 2 | 2 | 1 | 3 | 2 | 1 | 1 | 4 | 3 | 4 |
| | 4 | 0.01 | 0 | 0 | 0 | 0 | 0 | 0 | 0 | 0 | 0 | 0 | 0 | 0 | 0 | 0 | 0 | 0 |
| 7 | 4 | 5.6 | 3 | 4 | 4 | - | 4 | 3 | 4 | 2 | 2 | 4 | 4 | 3 | 4 | 4 | 4 | 4 |
| | 4 | 1.12 | 3 | 4 | 3 | 1 | 4 | 3 | 4 | 4 | 4 | 4 | 4 | 2 | 4 | 4 | 4 | 4 |
| | 4 | 0.28 | 0 | 2 | 2 | 0 | 2 | 2 | 1 | 2 | 0 | 4 | 1 | 1 | 1 | 4 | 4 | 3 |
| | 2 | 0.06 | 0 | 0 | 0 | 0 | 0 | 0 | 0 | 0 | 0 | 0 | 0 | 0 | 0 | 0 | 1 | 2 |
| | 2 | 0.01 | 0 | 0 | 0 | 0 | 0 | 0 | 0 | 0 | 0 | 0 | 0 | 0 | 0 | 0 | 0 | 0 |
| 8 | 4 | 5.6 | 2 | 4 | 3 | 3 | 4 | 3 | 4 | 3 | 3 | 4 | 4 | 2 | 4 | 4 | 4 | 4 |
| | 4 | 1.12 | 2 | 4 | 3 | 1 | 3 | 3 | 3 | 3 | 2 | 4 | 4 | 2 | 2 | 4 | 3 | 4 |
| | 4 | 0.28 | 1 | 2 | 2 | 1 | 3 | 2 | 2 | 2 | - | 4 | 4 | 1 | 2 | 3 | 3 | 3 |
| | 4 | 0.06 | 1 | 1 | 1 | 0 | 1 | 1 | 1 | 2 | 0 | 2 | 1 | 1 | 0 | 3 | 2 | 2 |
| | 4 | 0.01 | 1 | 0 | 0 | 0 | 0 | 0 | 0 | 1 | 0 | 2 | 0 | 0 | 0 | 1 | 1 | 1 |

- Indicates species of plant absent during this test.

From the test results presented in Tables I and II, it can be seen that the post-emergent herbicidal activity of the compounds of this invention is, for the most part, general in nature. In certain specific instances, however, some selectivity is demonstrated. In this regard it should be recognized that each individual species selected for the above tests is a representative member of a recognized family of plant species.

Typically, herbicidal compounds of this invention are provided in the form of concentrates which require dilution prior to application to plants. The usual means for diluting the herbicide is the preparation of herbicidal compositions wherein the compound possessing herbicidal activity is mixed with other materials. Such other materials may be in either liquid or solid form and comprise adjuvants, inert materials, etc.

The herbicidal composition containing herbicidal compounds of this invention are prepared in the usual manner by combining them with other materials which are well known in the herbicide art. The following is a description of herbicidal compositions employing the herbicidal compounds of this invention together with known materials and formulations typically utilized in the herbicide art.

The herbicidal compositions, including concentrates which require dilution prior to application to the plants, of this invention contain from 5 to 95 parts by weight of at least one compound of this invention and from 5 to 95 parts by weight of an adjuvant in liquid or solid form, for example, from about 0.25 to 25 parts by weight of wetting agent, from about 0.25 to 25 parts by weight of a dispersant and from 4.5 to about 94.5 parts by weight

of inert liquid extender, e.g., water, acetone, tetrahydrofuran, all parts being by weight of the total composition. Preferably, the compositions of this invention contain from 5 to 75 parts by weight of at least one compound of this invention, together with the adjuvants. Where required, from about 0.1 to 2.0 parts by weight of the inert liquid extender can be replaced by a corrosion inhibitor such as ethanol mercaptan, sodium thiosulfate, dodecylmono or dimercaptan or anti-foaming agent such as a dimethylpolysiloxane, or both. The compositions are prepared by admixing the active ingredient with an adjuvant including diluents, extenders, carriers, and conditioning agents to provide compositions in the form of finely-divided particulate solids, pellets, solutions, dispersions or emulsions. Thus, the active ingredient can be used with an adjuvant such as a finely-divided solid, a liquid of organic origin, water, a wetting agent, a dispersing agent, an emulsifying agent, or any suitable combination of these.

The herbicidal compositions of this invention, particularly liquids and soluble powders, preferably contain as a conditioning agent one or more surface-active agents in amounts sufficient to render a given composition readily dispersible in water or in oil. The incorporation of a surface-active agent into the compositions greatly enhances their efficacy. By the term "surface-active agent", it is understood that wetting agents, dispersing agents, suspending agents and emulsifying agents are included therein. Anionic, cationic and nonionic agents can be used with equal facility.

Preferred wetting agents are alkyl benzene and alkyl naphthalene sulfonates, sulfated fatty alcohols, amines or acid amides, long chain acid esters of sodium isothionate, esters of sodium sulfosuccinate, sulfated or sulfonated fatty acid esters petroleum sulfonates, sulfonated vegetable oils, polyoxyethylene derivatives of phenols and alkylphenols (particularly isooctylphenol and nonylphenol) and polyoxyethylene derivatives of the mono-higher fatty acid esters of hexitol anhydrides (e.g., sorbitan). Preferred dispersants are methyl cellulose, polyvinyl alcohol, sodium lignin, sulfonates, polymeric alkyl naphthalene sulfonates, sodium naphthalene sulfonate, polymethylene bisnaphthalenesulfonate and sodium N-methyl-N-(long chain acid) taurates.

When operating in accordance with the present invention, effective amounts of the compounds or compositions of this invention are applied to the plants, or are incorporated into aquatic media in any convenient fashion. The application of the herbicidal compositions can be carried out by conventional methods, e.g., power dusters, boom and hand sprayers and spray dusters. The compositions can also be applied from airplanes as a dust or a spray because of their effectiveness at low dosages. The application of herbicidal compositions to aquatic plants is usually carried out by adding the compositions to the aquatic media in the area where control of the aquatic plants is desired.

The application of an effective amount of the compounds or compositions of this invention to the plant is essential and critical for the practice of the present invention. The exact amount of active ingredient to be employed is dependent upon the

response desired in the plant as well as such other factors as the plant species and stage of development thereof, and the amount of rainfall as well as the specific glycine employed. In foliar treatment for the control of vegetative growth, the active ingredients are applied in amounts from about 0.112 to about 56.0 or more kilograms per hectare. In applications for the control of aquatic plants, the active ingredients are applied in amounts of from about 0.01 parts per million to about 1000 parts per million, based on the aquatic medium. An effective amount for phytotoxic or herbicidal control is that amount necessary for overall or selective control, i.e., a phytotoxic or herbicidal amount. It is believed that one skilled in the art can readily determine from the teachings of this specification, including examples, the approximate application rate.

There are several possible methods for applying liquid compositions of this invention to emerged plants. Such methods include the use of wiper systems whereby the plant to be treated is contacted with an absorbent material containing the particular liquid composition, a portion of which is thereby released onto the plant upon contact therewith. Such wiper systems typically comprise a reservoir of the liquid composition into which a portion of the absorbent material is placed and is fed therethrough. Generally, substances employable as absorbent material include substances of any shape or form capable of absorbing the liquid composition and releasing a portion of the same upon contact with the plant. Typical absorbent materials include felt, foam rubber, cellulose, nylon, sponges, hemp, cotton, burlap, polyester over acrylic, combinations thereof

and the like. Forms of absorbent material include rope, twine, string, cloths, carpets, combinations thereof and the like. These forms may be assembled in any manner desired including a pipe rope wick, a wedge rope wick, a multi-rope wick and the like.

In another possible application method, liquid compositions may be selectively applied to weeds by the use of recirculating sprayer systems wherein the recirculting spray unit is mounted on a tractor or high clearance mobile equipment and the spray is directed horizontally onto the weeds growing over a crop. Spray not intercepted by the weeds is collected in a recovery chamber before contacting the crop and is reused. Roller applications may also be employed to apply liquid compositions to weeds growing over a crop.

In yet another possible application method, shielded applicators may be employed to direct the liquid composition in the form of a spray onto the weeds while effectively shielding the crops from the spray.

These and other possible application methods for selectively applying liquid compositions to weeds are discussed in detail in Innovative Methods of Post-Emergence Weed Control, McWhorter C.G, Southern Weed Science Society, 33rd Annual Meeting Proceedings, Jan. 15-17, 1980; Auburn University Printing Service, Auburn, Alabama U.S.A., the teachings of which are incorporated herein by reference in their entirety.

Another possible method of applying liquid compositions of this invention to plants includes controlled droplet application which is also known as the ultra low-volume chemical application. Controlled droplet application involves the production of uniform or nearly uniform spray drops of a predetermined size and the conveyance of these drops with negligible evaporation to a spray target. In particular, this method comprises feeding spray solutions to a rotary atomizer comprising a small disk with serrated edges that disperses liquid into droplets as the disk spins. Different droplet sizes are produced by changing solution flow rates to the spinning disk or changing the speed of rotation of the disk.

Those of skill in the art will recognize that the physical and chemical characteristics of the compounds or compositions employed will determine to a large extent the particular application method selected therefor.

The aforementioned and other possible methods for applying liquid compositions to plants are discussed in detail in "Rope Wick Applicator - Tool with A Future", Dale, James E., pp. 3-4, "The Recirculating Sprayer and Roundup® Herbicide", Derting, Claude W., pp. 5-7, and "C.D.A. Herbicide Application", McGarvey, Frank X., Weeds Today, Volume 11, Number 2, pp. 8-9, Late Spring, 1980, 309 W. Clark St., Champaign, Illinois, the teachings of which are incorporated herein by reference in their entirety.

Although this invention has been described with respect to specific modifications, the details thereof are not to be construed as limitations, for

it will be apparent that various equivalents, changes, and modifications may be resorted to without departing from the spirit and scope thereof and it is understood that such equivalent embodiments are intended to be included herein.

WE CLAIM:

1. A compound of the formula

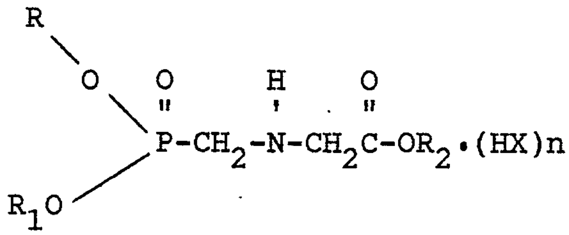

wherein R and $R_1$ are independently selected from the group consisting of phenyl, benzyl, naphthyl, biphenylyl; or phenyl, benzyl, biphenylyl or naphthyl groups substituted with from 1 to 3 groups selected from the class consisting of nitro, lower alkyl, lower alkoxy, lower alkylthio, trifluoromethyl or halo.

$R_2$ is an aralower alkyl or substituted aralower alkyl group, n is an integer of 0 or 1 and HX is a strong acid.

2. A compound of the formula

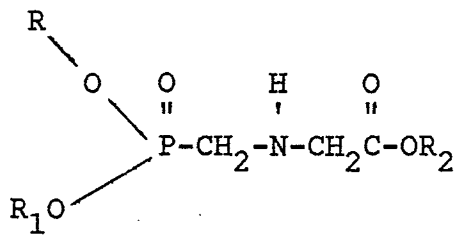

wherein R and $R_1$ are independently selected from the group consisting of phenyl, benzyl, naphthyl, biphenylyl; or phenyl, benzyl, biphenylyl or naphthyl groups substituted with from 1 to 3 groups selected from the class consisting of nitro, lower alkyl, lower alkoxy, lower alkylthio, trifluoromethyl or halo;

$R_2$ is an aralower alkyl or substituted aralower alkyl group.

3. A compound of Claim 1 wherein R is phenyl or phenyl substituted with lower alkyl or lower alkoxy and $R_2$ is aralower alkyl.

4. A compound of Claim 3 wherein said compound is glycine, N[[bis(4-chloro-3-methylphenoxy)-phosphinyl]methyl]-, phenylmethyl ester, methanesulfonic acid, salt.

5. A compound of Claim 3 wherein said compound is glycine, N-[[bis(2-methoxyphenoxy)phosphinyl]-methyl]-, phenylmethyl ester, methanesulfonic acid, salt.

6. A compound of Claim 3 wherein said compound is glycine, N-[(bisphenoxyphosphinyl)methyl]-, phenylmethyl ester, methanesulfonic acid salt.

7. A compound of Claim 2 wherein R is phenyl or phenyl substituted with halogen, lower alkyl or lower alkoxy, and $R_2$ is araloweralkyl.

8. A compound of Claim 7 wherein said compound is glycine, N-[[bis(4-chloro-3-methylphenoxy)-phosphinyl]methyl]-, phenylmethyl ester.

9. A compound of Claim 7 wherein said compound is glycine, N-[[bis(4-methoxyphenoxy)-phosphinyl]methyl]-, phenylmethyl ester.

10. A compound of Claim 7 wherein said compound is glycine, N-[(bisphenoxyphosphinyl)-methyl]-, phenylmethyl ester.

11. A herbicidal composition which comprises an inert adjuvant and a herbicidally effective amount of a compound of the formula

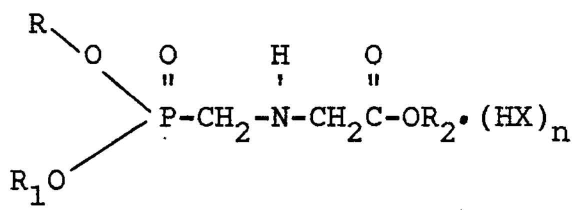

wherein R and $R_1$ are independently selected from the group consisting of phenyl, benzyl, naphthyl,

biphenylyl; or phenyl, benzyl, biphenyl, or naphthyl groups substituted with from 1 to 3 groups selected from the class consisting of nitro, lower alkyl, lower alkoxy, lower alkylthio, trifluoromethyl, or halo;

$R_2$ is an aralower alkyl or substituted aralower alkyl group, n is an integer or 0 or 1, and HX is a strong acid salt.

12. A herbicidal composition which comprises an inert adjuvant and a herbicidally effective amount of a compound of the formula

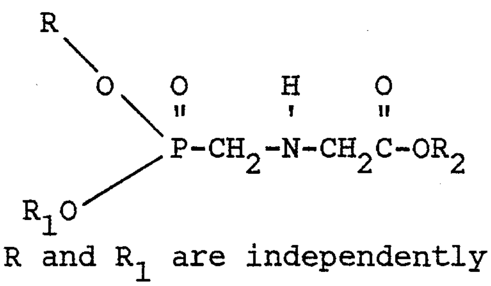

wherein R and $R_1$ are independently selected from the group consisting of phenyl, benzyl, naphthyl, biphenylyl; or phenyl, benzyl, biphenyl or naphthyl groups substituted with from 1 to 3 groups selected from the class consisting of nitro, lower alkyl, lower alkoxy, lower alkylthio, trifluoromethyl, or halo;

$R_2$ is an aralower alkyl or substituted aralower alkyl group.

13. A herbicidal composition of Claim 11 wherein R is phenyl or phenyl substituted with lower alkyl or lower alkoxy and $R_2$ is araloweralkyl.

14. A herbicidal composition of Claim 13 wherein said compound is glycine, N[[bis(4-chloro-3-methylphenoxy)phosphinyl]methyl]-, phenylmethyl ester, methanesulfonic acid, salt.

15. A herbicidal composition of Claim 13 wherein said compound is glycine, N-[[bis(2-methoxy-phenoxy)phosphinyl]-methyl]-, phenylmethyl ester, methanesulfonic acid, salt.

16. A herbicidal composition of Claim 13 wherein said compound is glycine, N-[(bisphenoxy-phosphinyl)methyl]-, (phenylmethyl) ester, methanesulfonic acid salt.

17. A herbicidal composition of Claim 12 wherein R and $R_1$ are independently phenyl or phenyl substituted with halogen, lower alkyl or lower alkoxy; and $R_2$ is araloweralkyl.

18. A herbicidal composition of Claim 17 wherein said compound is glycine, N-[[bis(4-chloro-3-methylphenoxy)-phosphinyl]methyl]-, phenylmethyl ester.

19. A herbicidal composition of Claim 17 wherein said compound is glycine, N-[[bis(4-methoxy-phenoxy)-phosphinyl]methyl]-, phenylmethyl ester.

20. A herbicidal composition of Claim 17 wherein said compound is glycine, N-[(bisphenoxy-phosphinyl)methyl]-, phenylmethyl ester.

21. A method which comprises contacting a plant with a herbicidally effective amount of a compound of Claim 1.

22. A method which comprises contacting a plant with a herbicidally effective amount of a compound of Claim 2.

23. A method which comprises contacting a plant with a herbicidally effective amount of a compound of Claim 3.

24. A method which comprises contacting a plant with a herbicidally effective amount of a compound of Claim 4.

25. A method which comprises contacting a plant with a herbicidally effective amount of a compound of Claim 5.

26. A method which comprises contacting a plant with a herbicidally effective amount of a compound of Claim 6.

27. A method which comprises contacting a plant with a herbicidally effective amount of a compound of Claim 7.

28. A method which comprises contacting a plant with a herbicidally effective amount of a compound of Claim 8.

29. A method which comprises contacting a plant with a herbicidally effective amount of a compound of Claim 9.

30. A method which comprises contacting a plant with a herbicidally effective amount of a compound of Claim 10.

European Patent Office

# EUROPEAN SEARCH REPORT

0141794

Application number

EP 84 87 0109

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 055 925 (MONSANTO) * Example 8, claim 11 * | 1,6,10 | C 07 F 9/40<br>A 01 N 57/22 |
| X | US-A-4 322 239 (MONSANTO) * Example 4 * | 1,6,10 | |
| X,P | US-A-4 428 765 (MONSANTO) * Examples V, VI, IX, X, column 1, lines 58, 59 inconnection with formula II, column 2 * & BE-A-894593 (Cat. X) | 1,6,9,10 | |
| A,D | US-A-4 120 689 | 1 | |

TECHNICAL FIELDS SEARCHED (Int. Cl.4)

C 07 F 9/40
A 01 N 57/22

The present search report has been drawn up for all claims

| Place of search | Date of completion of the search | Examiner |
|---|---|---|
| BERLIN | 30-10-1984 | KAPTEYN H G |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document